# DEMANDE DE BREVET EUROPEEN

(11) **EP 2 250 909 A1**
(43) Date de publication de la demande: **17.11.2010**
(21) Numéro de dépôt: 10305479.7
(22) Date de dépôt: 06.05.2010
(51) Int. Cl.: A23L 1/20, A23L 1/36

(54) **Procédé de fabrication d'un ingrédient alimentaire en poudre issu de graines de lupin**

(30) Priorité: 07.05.2009 FR 0902216
(71) Demandeur: Terrena, 44150 Ancenis (FR)
(72) Inventeur: Seger, Alice, 44000, NANTES (FR); Marquis, Philippe, 35640, MARTIGNE FERCHAUD (FR)
(74) Mandataire: Michelet, Alain

(57) **Abrégé**

La présente invention concerne un procédé pour la fabrication d'un ingrédient alimentaire en poudre issu de graines de lupin.
Ce procédé comprend la succession d'opérations suivantes : - la mise en suspension d'une quantité de farine issue de graines de lupin broyées, dans une quantité d'eau, - la neutralisation de ladite suspension, puis - le séchage de ladite suspension, de sorte à récupérer ledit ingrédient alimentaire en poudre.

L'ingrédient alimentaire ainsi obtenu a l'intérêt de présenter des capacités colorantes et émulsifiantes, particulièrement intéressantes, notamment par rapport aux farines non-traitées de lupin.

## Description

La présente invention a trait au domaine agroalimentaire. Elle concerne plus particulièrement un procédé de fabrication d'un ingrédient alimentaire issu de graines de lupin et se présentant sous forme de poudre.

Le lupin est une plante de la famille des légumineuses papilionacées ; il s'agit d'un protéagineux dont la graine, riche en protéines (jusqu'à 50 %), est constituée de deux cotylédons en forme de fève aplatie, entourés d'un tégument protecteur.

Les graines de lupin sont couramment employées en alimentation humaine et animale en raison de leurs caractéristiques nutritionnelles et fonctionnelles (couleur, rétention d'eau, pouvoir émulsifiant, etc.).

Ces graines sont notamment recherchées pour leur apport protéique important. Elles sont en plus riches en fibres. Les acides aminés et acides gras essentiels y sont encore présents de façon équilibrée.

Ces graines de lupin peuvent être utilisées sous différentes formes.

Selon une première approche, elles peuvent être utilisées sous la forme d'un extrait aqueux, issu d'un procédé décrit dans le document FR-A-2 806 261.

Le procédé correspondant consiste :
a/ à préparer un extrait aqueux d'un substrat à base d'un broyat de graines de lupin, cela - par dispersion de la farine de graines de lupin dans de l'eau, - par maintien de la dispersion sous agitation, et - par séparation physique entre l'extrait aqueux et les matières insolubles (centrifugation, décantation, etc.) ;
b/ à soumettre l'extrait aqueux à une opération de fermentation par départ des bactéries aptes à hydrolyser les α-galactosides ;
c/ à stopper la fermentation appliquée à cet extrait aqueux ; et
d/ à sécher l'extrait aqueux fermenté, de préférence sur une tour d'atomisation classique, de sorte à obtenir une poudre.
Les étapes de fermentation (b) et de séchage (d) sont ainsi mises en oeuvre sur l'extrait aqueux, c'est-à-dire sur le surnageant d'une suspension après l'étape de séparation physique.

L'ingrédient objet de ce document FR-2 806 261 correspond donc uniquement à l'extrait aqueux du substrat de base, à l'exclusion des matières insolubles.

Selon une autre approche, ces graines de lupin peuvent être également utilisées directement sous forme de farine, obtenue après décorticage et broyage des graines.
De telles farines de graines décortiquées/broyées, et leur procédé de fabrication, sont par exemple décrits dans le document FR-2 660 163. Les farines correspondantes ont l'intérêt de présenter naturellement des propriétés colorantes, émulsifiantes et de rétention d'eau intéressantes.

La présente invention a pour but de proposer un procédé de fabrication d'un nouvel ingrédient alimentaire à base de graines de lupin, dont les caractéristiques colorantes et émulsifiantes sont encore améliorées, tout en conservant la composition nutritionnelle originelle de la graine de lupin (c'est-à-dire en conservant un rendement de production se rapprochant de 100 %).

En l'occurrence, le procédé de fabrication selon l'invention est caractérisé par la mise en oeuvre de la succession d'opérations suivantes :
- mise en suspension d'une quantité de farine issue de graines de lupin broyées (décortiquées ou non), dans une quantité d'eau,
- neutralisation du pH de ladite suspension, puis
- séchage de ladite suspension, de sorte à récupérer ledit ingrédient alimentaire en poudre.

Comme développé par la suite, le procédé selon l'invention permet d'obtenir un ingrédient alimentaire en poudre correspondant à une farine traitée, composée de l'extrait aqueux et de la matière insoluble, neutralisée et séchée.
Ce produit selon l'invention est ainsi de nature bien différente de celui objet du document FR-2 806 261, ce dernier consistant pour rappel en un extrait aqueux du substrat de base.

Des caractéristiques avantageuses de l'invention, pouvant être prises en combinaison ou indépendamment les unes des autres, sont développées ci-après :
- l'opération de neutralisation consiste à ajuster le pH de la suspension à une valeur comprise entre 6,8 et 7,8 ;
- l'opération de neutralisation est obtenue par l'incorporation d'une quantité appropriée d'un correcteur d'acidité alimentaire dans la suspension, par exemple de l'hydroxyde de potassium alimentaire ;
- l'opération de neutralisation comprend un temps de macération compris entre 5 et 60 minutes sous agitation ;
- l'opération de mise en suspension de la farine dans l'eau est réalisée avec un ratio en poids farine/eau compris entre 1/3 et 1/10, et la température de l'eau de suspension est comprise entre 10°C et 65°C ;
- l'opération de séchage est mise en oeuvre de sorte à obtenir un ingrédient alimentaire sous forme de poudre ayant une humidité résiduelle inférieure à 10 % ; cette opération de séchage est avantageusement mise en oeuvre au moyen d'une tour d'atomisation, avec une température d'entrée comprise entre 180°C et 230°C et une température de sortie comprise entre 70 °C et 100 °C.

Le procédé comprend encore une opération optionnelle de traitement thermique de la suspension farine/eau, consistant avantageusement en une opération de chauffage dans laquelle la température de ladite suspension est maintenue entre 60°C et 85°C, pendant une durée comprise entre 30 secondes et 6 minutes. Ce traitement thermique facultatif permet de garantir la sécurité alimentaire du produit fini, du point de vue bactériologique (élimination de la charge bactérienne potentielle).

Le procédé selon l'invention comprend également avantageusement des opérations préalables pour l'obtention d'une farine de graines de lupin broyées, à savoir :
- le nettoyage de graines de lupin entières,
- éventuellement, le traitement thermiquement et le décorticage des graines de lupin nettoyées,
- le broyage des graines de lupin jusqu'à atteindre une granulométrie comprise entre 10 et 1000 µm.

La présente invention concerne encore un ingrédient alimentaire en poudre issu de graines de lupin obtenu avantageusement par le procédé de fabrication selon l'invention.

L'ingrédient alimentaire correspondant a l'intérêt de conserver les caractéristiques nutritionnelles de la farine de graines de lupin (richesse en protéines et en fibres, équilibre des acides aminés et acides gras essentiels, etc.).
En plus, cet ingrédient présente des capacités émulsifiantes et colorantes améliorées, par rapport à celles de la farine de lupin d'origine.
On peut ainsi l'utiliser dans de nombreuses applications, par exemple la BVP (boulangerie, viennoiserie, pâtisserie), la biscuiterie, les mélanges pour produits carnés, les produits sans gluten, etc.

La description suivante détaille un exemple possible du procédé objet de l'invention.

Ce procédé consiste à traiter de la farine de graines de lupin, obtenue à partir de graines de lupin nettoyées, décortiquées (ou non) et broyées. Cette farine est avantageusement choisie parmi celles issues de *Lupinus albus, Lupinus angustifolius* ou *Lupinus luteus.*

La farine correspondante peut provenir du commerce. On peut aussi la préparer dans le cadre du procédé selon l'invention.

Dans ce dernier cas, les opérations de fabrication de cette farine de lupin peuvent consister à mettre en oeuvre la succession d'opérations suivantes :
- une opération de nettoyage consistant, après réception et stockage des graines entières, à éliminer soigneusement la grande majorité des impuretés présentes au moyen de machines du type séparateur à tamis vibrant, appareil magnétique, épierreur, etc. ;
- une opération facultative de calibrage, permettant l'élimination de la grande majorité des graines cassées et/ou attaquées ;
- une opération de traitement thermique facultative, en fonction du produit désiré, consistant à cuire les graines de lupin à une température avantageusement comprise entre 100°C et 150°C pendant une durée comprise entre une et dix minutes ;
- des opérations optionnelles de décorticage, mise en oeuvre par exemple au moyen d'un décortiqueur centrifuge à choc, et de séparation des coques et cotylédons, par exemple par des techniques de séparation par air ;
- une opération de broyage, par exemple au moyen d'un pré-broyeur suivi d'un broyeur à cylindres presseurs, de sorte à obtenir une farine dont la granulométrie est comprise entre 10 et 1000 µm, et de préférence encore comprise entre 10 et 500 µm.

Partant de cette farine de lupin, différentes opérations sont ensuite effectuées jusqu'à l'obtention de l'ingrédient final selon l'invention.

Tout d'abord, cette farine de lupin est mise en suspension dans de l'eau.
Le ratio farine/eau en poids est compris entre 1/3 et 1/10^{ème}, de préférence encore entre 1/3 et 1/6.
La température de l'eau de suspension est comprise entre 10°C et 65°C, de préférence encore entre 10 °C et 40 °C.
Cette mise en suspension est par exemple réalisée en batch dans une cuve agitée, ou en ligne dans un bac sous agitation puis stockée dans une cuve agitée.

Cette suspension farine de lupin/eau est ensuite neutralisée de sorte que son pH soit de l'ordre de 7, de préférence compris entre 6,8 et 7,8, de préférence encore entre 7,2 et 7,5.
Cette neutralisation est avantageusement mise en oeuvre au moyen d'hydroxyde de potassium alimentaire (KOH), encore couramment dénommé « lessive de potasse ». Cette opération de neutralisation s'effectue selon une période de macération comprise entre 5 et 60 minutes, en fonction du procédé d'incorporation du correcteur d'acidité.
En pratique, dans le cas d'une mise en suspension en batch, le correcteur d'acidité est dilué par-dessus la cuve. Dans le cas d'une mise en suspension en ligne, le correcteur d'acidité est ajouté avec l'eau.

La suspension neutralisée fait ensuite l'objet d'une opération de traitement thermique, en l'occurrence du type pasteurisation.
A cet effet, la suspension est maintenue à une température comprise entre 60°C et 85°C, pendant un temps compris entre 30 secondes et 6 minutes.
Elle est ensuite refroidie rapidement (selon les caractéristiques du refroidisseur), jusqu'à atteindre une température inférieure à 5°C.

Cette suspension neutralisée et stérilisée est enfin séchée, avantageusement sur une tour d'atomisation.
Dans ce dernier cas, la température d'entrée est avantageusement comprise entre 180°C et 230°C ; et la température de sortie est avantageusement comprise entre 70°C et 100 °C.
De manière générale, ce séchage est adapté de sorte à obtenir une poudre sèche ayant un taux d'humidité résiduel inférieur à 10 % ; de préférence, ce taux est encore compris entre 5 et 8 %.

Comme abordé précédemment, l'ingrédient alimentaire ainsi obtenu, correspondant à une farine traitée, a l'intérêt de présenter des capacités colorantes et émulsifiantes, particulièrement intéressantes, notamment par rapport à la farine de lupin non-traitée telle que décrite dans le document FR-2 660 163.

Un ingrédient alimentaire selon l'invention a été analysé, en comparaison d'une farine de lupin non traitée. Les caractéristiques chimiques mesurées sont rapportées dans le tableau ci-dessous (Tableau 1).

**Tableau 1**

| ***Ingrédient selon l'invention*** | | ***Farine de lupin non traitée*** | |
|---|---|---|---|
| Analyse biochimique | | Analyse biochimique | |
| Humidité | 6% ± 1% | Humidité | 8% ± 1% |
| En % de la matière sèche : | | En % de la matière sèche : | |
| Protéines (N x 6,25) | 44 % ± 2% | Protéines (N x 6,25) | 44 % ± 2% |
| Fibres | 29% ± 3% | Fibres | 28 % ± 3% |
| Matières Grasses | 12% ± 2% | Matières Grasses | 12 ± 2% |
| Sucres solubles | 10% ± 2% | Sucres solubles | 10% ± 2% |
| Minéraux | 5% ± 1% | Minéraux | 4% ± 1% |
| Gluten | < 5 ppm | Gluten | < 5 ppm |
| Soja | < 20 ppm | | |
| Lactose | < 50 ppm | Caroténoïdes totaux | >4mg/100g |
| Analyse organoleptique | | Analyse organoleptique | |
| Couleur : | Poudre jaune | Couleur | Jaune |
| Odeur et goût | Neutre | Odeur et goût : | Spécifique du Lupin |
| Analyse physique | | Analyse physique | |
| Densité non tassée | 0,3 ± 0,5 % | Densité non tassée | 0,30 - 0,40 |
| Solubilité protéique | >65 % | Solubilité protéique à | pH 6,5 > 65 % |
| pH dans l'eau | 7,3 ± 0,5% | pH dans l'eau | 5,89 |
| Granulométrie | 100 % <500µm | Granulométrie | 95 % < 500 µm |
| | 90 % < 250µm | | 100 % < 700 µm |

Les caractéristiques fonctionnelles de cet ingrédient alimentaire selon l'invention ont été vérifiées, en comparaison de la farine de lupin non traitée. Les caractéristiques mesurées sont rapportées dans le tableau ci-dessous (Tableau 2).

**Tableau 2**

| ***Ingrédient selon l'invention*** | ***Farine de lupin non traitée*** |
|---|---|
| Pouvoir émulsifiant | Pouvoir émulsifiant |
| 415 g d'huile / g d'ingrédient | 330 g d'huile / g de farine |
| soit 1000 g d'huile / g de protéines | soit 776 g d'huile / g de protéines |
| Rétention d'huile | Rétention d'huile |
| 1,05 g d'huile / g d'ingrédient | 0,94 g d'huile / g de farine |

Ces résultats montrent l'amélioration de la capacité émulsifiante de l'ingrédient selon l'invention, et aussi une légère amélioration de son pouvoir de rétention d'huile.

## Revendications

1. Procédé pour la fabrication d'un ingrédient alimentaire en poudre issu de graines de lupin, **caractérisé en ce qu'**il comprend la succession d'opérations suivantes :
- la mise en suspension d'une quantité de farine issue de graines de lupin broyées, dans une quantité d'eau,
- la neutralisation du pH de ladite suspension,
- le séchage de ladite suspension, de sorte à récupérer ledit ingrédient alimentaire en poudre.

2. Procédé de fabrication selon la revendication 1, **caractérisé en ce que** l'opération de neutralisation consiste à ajuster le pH de ladite suspension à une valeur comprise entre 6,8 et 7,8.

3. Procédé de fabrication selon l'une quelconque des revendications 1 ou 2, **caractérisé en ce que** l'opération de neutralisation est obtenue par l'incorporation d'une quantité appropriée d'un correcteur d'acidité alimentaire dans ladite suspension.

4. Procédé de fabrication selon l'une quelconque des revendications 1 à 3, **caractérisé en ce que** l'opération de neutralisation comprend un temps de macération compris entre 5 et 60 minutes sous agitation.

5. Procédé de fabrication selon l'une quelconque des revendications 1 à 4, **caractérisé en ce que** l'opération de mise en suspension de la farine dans l'eau est réalisée avec un ratio en poids farine/eau compris entre 1/3 et 1/10, et **en ce que** la température de l'eau de suspension est comprise entre 10 et 65°C.

6. Procédé selon l'une quelconque des revendications 1 à 5, **caractérisé en ce qu'**il comprend une opération de traitement thermique par chauffage, de ladite suspension farine/eau.

7. Procédé de fabrication selon la revendication 6, **caractérisé en ce que** l'opération de traitement thermique comprend une étape de chauffage dans laquelle la température de la suspension est maintenue entre 60 et 85°C pendant 30 secondes à 6 minutes.

8. Procédé de fabrication selon l'une quelconque des revendications 1 à 7, **caractérisé en ce que** l'opération de séchage est mise en oeuvre de sorte à obtenir un ingrédient alimentaire sous forme de poudre ayant une humidité résiduelle inférieure à 10 %.

9. Procédé de fabrication selon la revendication 8, **caractérisé en ce que** l'opération de séchage est mise en oeuvre au moyen d'une tour d'atomisation, avec une température d'entrée comprise entre 180 et 230°C et une température de sortie comprise entre 70 et 100 °C.

10. Ingrédient alimentaire susceptible d'être obtenu par la mise en oeuvre du procédé selon l'une quelconque des revendications 1 à 9.
